# EUROPÄISCHE PATENTSCHRIFT

(11) **EP 0 332 853 B1**
(45) Veröffentlichungstag und Bekanntmachung des Hinweises auf die Patenterteilung: **05.05.1993**
(21) Anmeldenummer: 89102402.8
(22) Anmeldetag: 11.02.1989
(51) Int. Cl.: F16L 33/00, F16L 33/26, F16L 33/20, B60H 1/00

(54) **Leitungsverbindung**
Conduit joint
Jonction de conduite

(30) Priorität: 12.03.1988 DE 3808383
(43) Veröffentlichungstag der Anmeldung: 20.09.1989
(73) Patentinhaber: Witzenmann GmbH Metallschlauch-Fabrik Pforzheim, D-75175 Pforzheim (DE)
(72) Erfinder: Schüttler, Peter, D-7532 Niefern-Öschelbronn 2 (DE); Winter, Klaus, Dipl.-Ing., D-7070 Schwäbisch-Gmünd (DE); Erlenmayer, Udo, D-7530 Pforzheim (DE)
(74) Vertreter: Lemcke, Rupert, Dipl.-Ing.

(56) Entgegenhaltungen:
- EP-A- 0 014 051
- EP-A- 0 202 481
- FR-A- 2 144 147
- US-A- 4 593 942

## Beschreibung

Die Erfindung betrifft eine Verbindung zwischen einer rohrförmigen Leitung und einem Anschlußteil durch Festlegen des Leitungsendes zwischen einem in dieses ragenden oder es umgebenden Rohrstück des Anschlußteiles und einer Hülse, die das Leitungsende endständig umgibt bzw. in dieses eingesetzt ist, wobei das Leitungsende durch radiale Querschnittsänderung des Rohrstückes oder der Hülse zwischen Hülse und Rohrstück eingepreßt ist und wobei zwischen Leitungsende und angrenzenden Teilen ein elastisches Teil angeordnet ist.

Eine derartige Leitungsverbindung ist für die Anbringung von Anschlußteilen an Schläuchen aus Kunststoff oder einem Elastomer durch die FR-A-2 144 147 bekannt. Sie führt zu guten Ergebnissen insbesondere im Hinblick auf Anforderungen bezüglich Gasdichtheit oder Flüssigkeitsdichtheit der Verbindung für ein rohrförmiges Leitungselement, das im übrigen die Verwendung einer rohrförmigen Leitung mit Gewährleistung einer hohen Flexibilität ermöglicht.

Nun gibt es jedoch eine Reihe von Anwendungsfällen, bei denen solche flexiblen Leitungselemente aus einem Kunststoff oder Elastomer weiteren Anforderungen nicht genügen, die sich im Hinblick auf absolute Diffusionsdichtigkeit, Alterungsbeständigkeit, Temperaturbeständigkeit, insbesondere Beständigkeit gegen mit tiefen Temperaturen einhergehende Verhärtung, sowie vor allem auch hohe Druckbelastungen ergeben.

Es gibt zwar flexible, metallische Leitungselemente, die wiederum diesen Anforderungen genügen, bezüglich hoher Druckbelastung insbesondere auch dadurch, daß sie mit einer an den Anschlußstücken festgelegten, druckbedingte Axialkräfte aufnehmenden Metalldrahtumflechtung versehen sind. Dabei muß jedoch in Kauf genommen werden, daß die absolut dichte Verbindung solcher Leitungselemente mit den Anschlußteilen nur durch Schweißen oder Löten möglich ist, wodurch eine solche Anschlußverbindung an sich keine schwingungsdämpfenden Eigenschaften aufweist, im Bereich der Löt- oder Schweißverbindung hoch belastet und damit bruchgefährdet ist sowie nur die Verbindung zueinander passender Materialien, das heißt also durch Löten oder Schweißen miteinander verbindbarer Materialien erlaubt. Auch stößt die Verwendung derartiger Anschlußverbindungen bei komplizierten Einbaufällen auf Schwierigkeiten.

Die vorstehend einander gegenüber gestellten Problemkrei se mögen insbesondere an Klimaanlagen für Kraftfahrzeuge verdeutlicht sein, ohne damit den Gegenstand der nachfolgend beschriebenen Erfindung einzuschränken. Bei solchen Klimaanlagen wird in zunehmendem Maße gefordert, daß die Leitungen für das Kältemittel absolut, also auch gegen Diffusion dicht sind, hohen Drücken standhalten, andererseits die miteinander zu verbindenden Teile schwingungsmäßig weitgehend abkoppeln, sich auch in komplizierter Weise bei engen Einbauverhältnissen anwenden lassen und nach Möglichkeit die Anwendung geeigneter, das heißt auch unterschiedlicher Materialien der die Gesamtleitung bildenden Teile erlauben. Dabei kommt der Anschlußverbindung eine vorrangige Bedeutung zu, da sich bei ihr die vorstehend im einzelnen geschilderten Anforderungen in einer problematischen Weise verdichten.

Aufgabe der Erfindung ist es daher, eine Verbindung der eingangs genannten Art so zu gestalten, daß sie den Anschluß eines absolut dichten und alterungsbeständigen Leitungselementes an ein Anschlußteil in einer ebenso absolut dichten, hierzu jedoch von dem Erfordernis der Schaffung einer Löt- oder Schweißverbindung befreiten Weise ermöglicht, wobei die Verbindung gleichzeitig hohen Druckbelastungen standhalten sowie schwingungsdämpfend und gegebenenfalls elektrisch isolierend ausgebildet sein soll, ohne daß durch die Ausbildung der dichten Verbindung für die Wahl des Materials des Leitungselementes einerseits und des Anschlußteils andererseits Vorschriften entstehen.

Diese Aufgabe ist erfindungsgemäß dadurch gelöst, daß die Leitung ein Ringwellschlauch aus Metall oder ein Ringwellrohr aus Metall ist und daß wenigstens zwischen Leitungsende unhd Rohrstück ein hohlzylindrisches Formteil aus einem Elastomer oder einem elastischen Kunststoff angeordnet und mit den angrenzenden Teilen verpreßt ist, dessen Länge im wesentlichen dem axialen Überdeckungsbereich von Leitungsende und Rohrstück entspricht.

Durch diese erfindungsgemäßen Maßnahmen ist zunächst einmal die Verwendung eines Ringwellschlauches oder Ringwellrohres aus Metall, also die Verwendung eines absolut auch gegen Diffusion dichten Leitungselementes möglich, das alterungsbeständig ist und auf der anderen Seite im Hinblick auch auf komplizierte Einbauverhältnisse hochflexibel sowie in beachtlichem Maße mit schwingungsdämpfenden Eigenschaften ausgestattet ist.

Andererseits ist durch die Erfindung das Verpressen eines Ringwellschlauches mit einem Rohrstück überhaupt erst in der Weise ermöglicht, daß eine absolut dichte, hohen Druckbelastungen standhaltende Verbindung zwischen dem Leitungselement und dem Anschlußteil entsteht, durch die das Erfordernis einer einstückigen Verbindung durch Löten oder Schweißen erübrigt wird, so daß lokale Belastungskonzentrationen und damit einhergehende Bruchgefahren im Anschlußbereich vermieden sind.

Durch die erfindungsgemäße Anordnung des Formteils aus einem Elastomer oder einem elastischen Kunststoff ergibt sich außerdem in hohem Maße eine schwingungsdämpfende Anschlußverbindung, wobei andererseits nunmehr für die Verbindung auf eine Abstimmung des Materials des Leitungselementes einerseits und des Anschlußteils andererseits keine besondere Rücksicht mehr genommen zu werden braucht.

Die erfindungsgemäße Verbindung ist kostengünstig und einfach herstellbar und erlaubt bei entsprechender Ausbildung auch eine gegenseitige elektrische Isolierung der miteinander verbundenen Teile.

Zweckmäßig ist es, daß das Rohrstück auf der dem Leitungsende zugewandten Seite mit einer umlaufenden Profilierung versehen ist.

Die Wellung des Leitungsendes im Überdeckungsbereich mit dem Rohrstück kann eine flach gedrückte oder eine axial gestauchte Wellung des Wellschlauches bzw. des Wellrohres sein, um auf diese Weise für das gegenseitige Verpressen der Anwendung höherer Preßkräfte zu erlauben.

In Weiterbildung des Erfindungsgegenstandes kann zwischen Leitungsende und Hülse ein hohlzylindrisches Zusatzformteil aus einem Elastomer, einem Kunststoff oder dergleichen nichtmetallischem Werkstoff angeordnet und mit den angrenzenden Teilen verpreßt sein, dessen Länge wenigstens dem axialen Überdeckungsbereich von Leitungsende und Hülse entspricht. Hiermit ergibt sich in weiterem Maße eine weiche Fassung des jeweiligen Leitungsendes zwischen Rohrstück des Anschlußteiles und Hülse, wobei Formteil und Zusatzformteil sich in weitgehendem Maße der Oberfläche der Leitungsenden anpassen und dadurch eine große gegenseitige Dichtfläche schaffen können.

Als vorteilhaft hat es sich ferner erwiesen, daß das Leitungsende stirnseits von einem radialen Bund des Formteiles oder des Zusatzformteiles überdeckt ist. Damit wird nicht nur die Dichtwirkung der erfindungsgemäßen Anschlußverbindung erhöht sondern gleichzeitig auch jeder Kontakt zwischen Leitungselement und Anschlußteil im Sinne einer sowohl schwingungstechnischen als auch elektrischen Abkopplung unterbunden.

Formteil und Zusatzformteil können einstückig miteinander verbunden sein.

Andererseits können Formteil und/oder Zusatzformteil vorgefertigt sein, um bei der Montage der Anschlußverbindung aufgesteckt oder in diesem Zusammenhang auf eines der benachbarten Teile aufgeschrumpft zu werden.

Formteile und/oder Zusatzformteil können jedoch auch bei ihrer Herstellung auf das Leitungsende und/oder das Rohrstück aufgeformt sein, was durch Aufspritzen, Aufvulkanisieren, Aufgießen oder dergleichen geschehen kann.

Hiermit verbinden sich als zweckmäßige weitere Merkmale, daß das Formteil mit einer der Profilierung des Rohrstückes entsprechenden Gegenprofilierung versehen ist, während auf der anderen Seite Formteil und/oder Zusatzformteil auf ihrer dem Leitungsende zugewandten Seite mit einer diesem Leitungsende entsprechenden oder angepaßten Profilierung versehen sein können

Gerade die Anpassung der gegenseitigen Profilierung von Leitungsende und Formteil beziehungsweise Zusatzformteil läßt eine große Gestaltungsfreiheit im Hinblick auf jeweils unterschiedliche Anforderungen an die Anschlußverbindung sowohl hinsichtlich ihrer Flexibilität als auch hinsichtlich ihrer Dichtheit und Haltbarkeit gegen äußere Einflüsse insbesondere in Form von Druckbelastungen zu. Dabei kann die dem Leitungsende zugewandte Profilierung von Formteil und/oder Zusatzformteil soweit gehen, daß Wellen des jeweiligen Leitungsendes vollständig ausgefüllt werden, das Leitungsende also vollständig formschlüssig erfaßt wird und dabei auch eine Abstützung der Flanken einer wellenförmigen Profilierung der Leitungsenden stattfindet, wodurch sich bei der Herstellung der Leitungsverbindung höhere Preßkräfte verwenden lassen.

Was die Hülse betrifft, so kann diese im gleichen Sinne im Überdeckungsbereich mit dem Leitungsende eine Profilierung aufweisen, die durch auf das Leitungsende zu gerichtete gegebenenfalls zwischen Wellen des Leitungsendes eingreifende Einprägungen gebildet sein kann oder auch aus Ringwellen bestehen kann. Gleichermaßen kann die Profilierung auch aus achsparallelen über den Umfang gleichmäßig verteilt angeordneten Eindrükkungen bestehen.

Darüber hinaus ist es vorteilhaft, daß die Hülse mit dem Anschlußteil jenseits des Leitungsendes formschlüssig verbunden ist, wozu die Hülse mit einem radial gerichteten Bund oder einer radial gerichteten Profilierung auf der dem Leitungsende abgewandten Seite eine entsprechende Kante des Anschlußteiles hintergreifen kann. Auf diese Weise wird ein zwischen Hülse und Leitungsende bestehender Kraft- oder Formschluß im Sinne einer Abstützung des Leitungsendes durch eine entsprechende Verbindung der Hülse mit dem Anschlußteil komplettiert.

Für alle vorstehend umfaßten Bauformen des Erfindungsgegenstandes gilt die Möglichkeit, daß die Leitung einen Überzug aus einem Drahtgeflecht aufweist und daß dessen Enden zwischen Hülse oder Rohrstück und Leitungsende beziehungsweise Zusatzformteil und/oder Anschlußteil festgelegt sind. Eine solche Umflechtung verhindert bei Wellschläuchen beziehungsweise Wellrohren der hier in Rede stehenden Art eine Längenausdehnung unter Innendruckbelastung und erhöht damit die Druckfestigkeit der gesamten Baueinheit auf ein Vielfaches. Außerdem schützt die Umflechtung die Leitung vor äußeren mechanischen Belastungen

Schließlich kann ebenfalls in allen vorgenannten Fällen das Anschlußteil am Ansatz des Rohrstückes eine radial gerichtete Anschlagfläche für das Leitungsende und/oder Formteil beziehungsweise Zusatzformteil aufweisen.

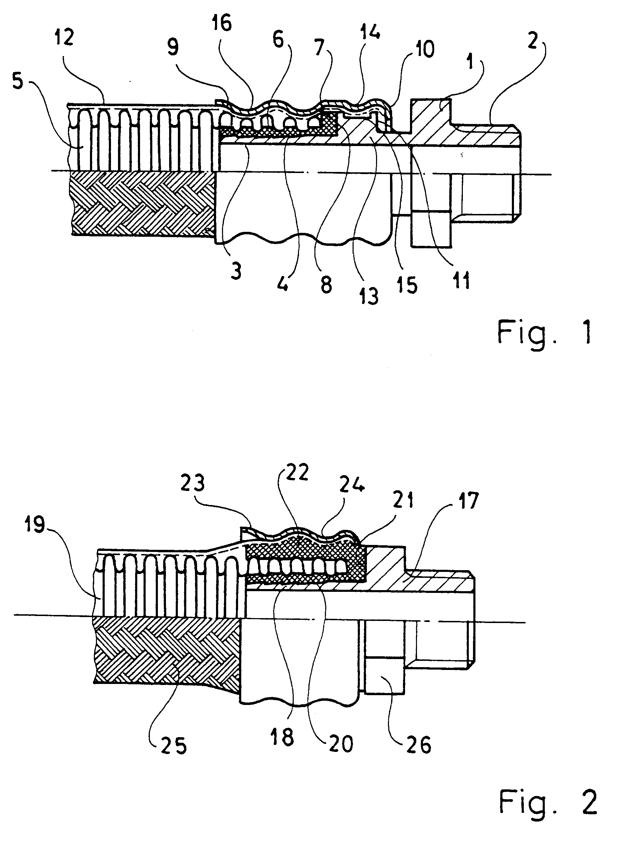

Weitere Einzelheiten der Erfindung ergeben sich aus der nachfolgenden Beschreibung von Ausführungsformen, die in den Figuren 1 bis 9 teilweise geschnitten oder in Halbschnittdarstellung wiedergegeben sind.

Figur 1 zeigt ein Anschlußteil 1 mit einem Gewinde 2, das auf seiner dem Gewinde abgewandten Seite ein Rohrstück 3 mit einer außen umlaufenden, sägezahnförmigen Profilierung 4 aufweist.

Auf dem Rohrstück 3 ist das Ende eines ringgewellten Metallschlauches 5 absolut dicht befestigt, wozu zwischen Ende des Wellschlauches 5 und Rohrstück 3 ein hohlzylindrisches Formteil 6 aus einem Elastomer eingesetzt ist, das die Stirnseite des Wellschlauches 5 mit einem radial nach außen gerichteten Bund 7 abdeckt, der gegen eine radial nach außen gerichtete Anschlagfläche 8 des Anschlußteiles 1 anliegt.

Die Befestigung des Wellschlauches geschieht durch eine diesen außen umgebende Hülse 9 aus Metall, die durch radiale Reduktion auf das Wellschlauchende aufgepreßt ist, wodurch das Wellschlauchende in der aus der Zeichnung ersichtlichen Weise radial zusammengedrückt wird und sich dabei mit den nach radial innen vorstehenden Wellentäler in das Material des Formteiles 6 eingräbt, das seinerseits in die Profilierung 4 des Rohrstückes 3 eindringt, soweit es nicht bereits bei seiner Herstellung mit einer der Profilierung 4 entsprechenden Innenprofilierung versehen worden ist.

Zur besseren Festigkeit der durch die radiale Reduktion der Hülse 9 gegebenen Verbindung ist der Hülse 9 im Verlauf dieser Reduktion gleichzeitig eine Profilierung in Form umlaufender Wellen 16 aufgegeben, mit der diese unter entsprechender Verformung des Wellschlauchendes mit diesem eine formschlüssige Verbindung eingeht. Um die dadurch in Axialrichtung geschaffene Tragfähigkeit der Anschlußverbindung weiter zu verbessern, ist die Hülse 9 an ihrem dem Anschlußteil 1 zugewandten freien Ende mit einem nach innen gerichteten Bund 10 versehen, der eine entsprechende Kante 11 auf der dem Ende des Wellschlauches 5 abgewandten Seite hintergreift.

Wie aus der Zeichnung ersichtlich, ist der Wellschlauch 5 außerdem von einem Geflechtsmantel 12 umgeben, der bei hohen Druckbelastungen des Wellschlauches die daraus resultierenden Kräfte abstützt. Dazu ist der Geflechtsmantel 12 mit in das Innere der Hülse 9 und über einen Bund 13 des Anschlußteiles 1 geführt. Die kraftschlüssige Verbindung des Geflechtsschlauches 12 auf dem Bund 13 geschieht durch eine besondere Einprägung der Hülse 9 in Verbindung mit einer außen auf dem Bund 13 umlaufenden, nutförmigen Vertiefung 15.

Das Formteil 6, das auch aus einem elastischen Kunststoff bestehen kann, ist im Falle der Figur 1 ersichtich vorgefertigt. Dabei kann in Abweichung zu der Darstellung in Figur 1 dieses Formteil auf seiner Außenseite auch mit einer dem Wellschlauch 5 angepaßten Profilierung versehen sein, um die Dichtfläche zu vergrößern und das Profil des Wellschlauches bei der Durchführung des Preßvorganges abzustützen.

Die in Figur 1 gezeigte Anschlußverbindung zwischen Wellschlauch 5 und Anschlußteil ist - und das gilt auch für die noch zu beschreibenden weiteren Ausführungsformen - absolut flüssigkeits- und gasdicht, ohne daß Wellschlauch 5 und Anschlußteil 1 miteinander verschweißt werden müßten, so daß für die Materialwahl dieser Teile keine gegenseitige Rücksicht zu nehmen ist. Andererseits ist die Anschlußverbindung damit in Grenzen elastisch und trägt zur Schwingungsdämpfung und damit zur Verhinderung von Schwingungsübertragungen bei.

Figur 2 zeigt ein Anschlußteil 17 mit einem außen profilerten Rohrstück 18, auf dem das Ende eines ringgewellten Schlauches 19 aus Metall festgelegt ist.

Hier ist das aus einem Elastomer oder einem elastischen Kunststoff bestehende, hohlzylindrische Formteil 20 einstückig über einen stirnseitigen Bund 21 mit einem hohlzylindrischen Zusatzformteil 22 verbunden,das das Schlauchende außen übergreift.

Die Festlegung geschieht auch hier wieder durch radiale Reduktion einer metallenen Hülse 23, durch die das Ende des Schlauches 19 in das Material von Formteil 20 und Zusatzformteil 22 eingedrückt wird, andererseits das Formteil 20 in die äußere Profilierung des Rohrstückes 18 gepreßt wird.

Ebenso, wie beim Beispiel gemäß Figur 1, ist auch im vorliegenden Falle die Hülse 23 im Zuge des Preßvorganges mit einer umlaufenden, wellenförmigen Profilierung 24 versehen worden, um einen gegenseitigen Formschluß zu schaffen und insbesondere auch auf dem Zusatzformteil 22 das Ende eines den Wellschlauch 19 umgebenden Geflechtsschlauches 25 festzulegen, der wiederum bei Innendruckbelastung des Wellenschlauches der Abstützung der daraus resultierenden Kräfte dient.

Wie außerdem aus Figur 2 ersichtlich, ist die Hülse 23 in Axialrichtung nicht ganz bis an einen Bund 26 des Anschlußteils 17 geführt, steht insbesondere nicht mit dem Anschlußteil 17 in berührender Verbindung, so daß zwischen Anschlußteil 17 einerseits und Wellschlauch 19 sowie Umflechtung 25 andererseits gleichzeitig eine galvanische Entkopplung gegeben ist.

Die aus Formteil 20 und Zusatzformteil 22 gebildete Einheit kann auch in diesem Falle vorgefertigt sein und auf das Ende des Wellschlauches 19 bei der Montage aufgesteckt werden, wobei die Außenseite des Formteils 20 und die Innenseite des Zusatzformteiles 22 bereits in einer an den Wellschlauch 19 angepaßten Weise vorprofiliert sein können, um einen besseren Formschluß und damit eine Erhöhung von Festigkeit und Dichtigkeit zu ergeben sowie das Wellschlauchprofil beim Preßvorgang zusätzlich abzustützen.

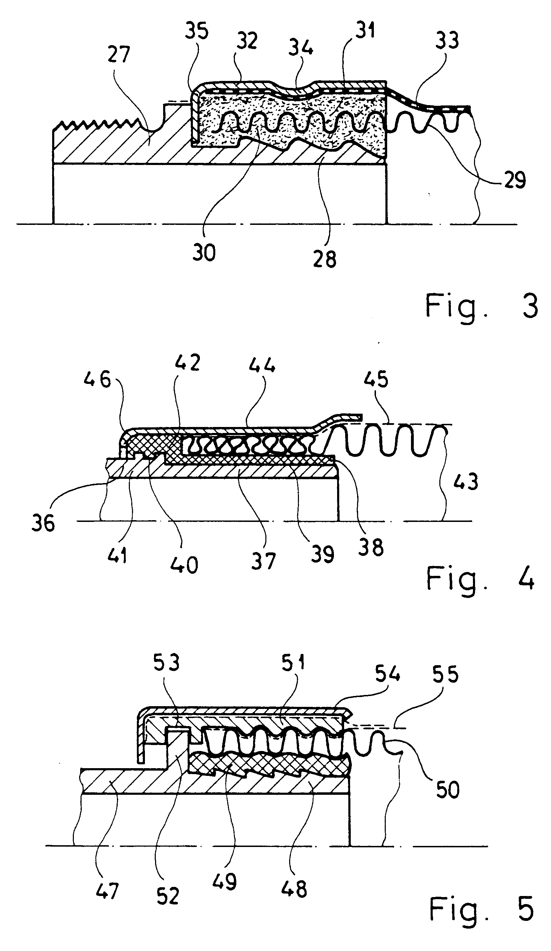

Figur 3 veranschaulicht ein Anschlußteil 27 mit außen profiliertem Rohrstück 28, auf dem das Ende eines ringgewellten Metallschlauches 29 festgelegt ist.

Hier bilden Formteil 30 und Zusatzformteil 31 eine Einheit, die auf das Ende des Wellschlauches 29 bei ihrer Herstellung aufgeformt ist, wobei diese Herstellung durch Gießen, Spritzen, Aufvulkanisieren etc. erfolgen kann. Diese Herstellungsart hat den Vorteil, daß die Wellen am Ende des Metallschlauches 29 vollständig mit dem Material von Formteil und Zusatzformteil ausgefüllt sind, so daß das Ende des Wellschlauches 29 allseits absolut dicht und formschlüssig in elastischer und damit schwingungsdämpfender Weise erfaßt sowie bezüglich der Stabilität seiner Wellen abgestützt ist.

Das so präparierte Ende des Wellschlauches 29 wird auf das Rohrstück 28 über dessen äußere, sägezahnförmige Profilierung aufgeschoben zusammen mit einer äußeren Hülse 32 aus Metall, die dann radial zusammengedrückt wird, um so das Ende des Wellschlauches 29 zusammen mit dem daran geformten Teil aus elastischem Kunststoff oder einem Elastomer auf dem Rohrstück 28 festzulegen.

Wie bereits anhand der Beispeile der Figuren 1 und 2 beschrieben, ist auch hier eine äußere Umflechtung 33 zwischen Zusatzformteil 31 und Hülse 32 festgelegt, wobei diese Befestigung noch durch eine nachträgliche radiale Einprägung 34 der Hülse 32 verbessert ist.

Soll auch bei dieser Bauform eine galvanische Entkopplung zwischen Anschlußteil 27 und Wellschlauch 29 einschließlich dessen Umflechtung 33 erfolgen, so wäre der radial nach innen gerichtete Bund 35 der Hülse 32 fortzulassen, der im vorliegenden Falle die aus Formteil 30 und Zusatzformteil 31 gebildete Baueinheit stirnseits kapselt.

Bei dem Beispiel gemäß Figur 4 ist auf ein Anschlußteil 36 mit Rohrstück 37 ein Formteil 38 aufgegossen, aufgespritzt oder aufvulkanisiert, so daß es in eine äußere, umlaufende Profilierung 39 des Rohrstückes 37 sowie 40 eines Bundes 41 des Anschlußteiles 36 zur zusätzlichen Axialkraftabstützung eingreift. Dabei ist das Formteil 38 über einen radialen Bund 42 um den Bund 41 des Anschlußteiles 36 herumgeführt.

Auf das so hergestellte Bauteil wird ein ringgewellter Schlauch 43 aus Metall mit seinem Ende bis zum Bund 42 aufgesteckt. Andererseits wird eine Hülse 44 aus Metall über das Ende des Ringwellschlauches 43 sowie das daneben liegende Ende des Formteiles 38 geschoben und anschließend im Durchmesser reduziert, so daß das Ende des Metallschlauches 43 radial zusammengepreßt und damit auf dem Formteil 38 festgelegt wird. Dabei kann gleichzeitig ein den Ringwellschlauch 43 umgebender und diesen bei Innendruckbelastung abstützender Geflechtsmantel 45 mit befestigt werden.

Dadurch, daß die Hülse 44 das dem Metallschlauch 43 abgewandte Ende des Formteiles 38 mit einem radial nach innen gerichteten Bund 46 umgreift, ist auch dieses Ende durch die radiale Reduktion der Hülse 44 zusammengepreßt und sicher auf dem Anschlußteil 36 festgehalten.

Wie die in Figur 4 dargestellte Ausführungsform unschwer zeigt, ist auch hier eine galvanische Entkopplung zwischen Anschlußteil 36 einerseits und ringgewelltem Schlauch 43 mit dem diesen umgebenden Geflecht 45 andererseits gegeben.

Figur 5 zeigt ein Anschlußteil 47 und dessen mit einer außen umlaufenden, sägezahnförmigen Profilierung versehenes Rohrstück 48, auf dem unter Zwischenschaltung eines Formteils 49 aus Elastomer oder einem Kunststoff das Ende eines ringgewellten Metallschlauches 50 radial aufgepreßt ist derart, daß das Material des Formteils 49 teilweise in die Wellung des Schlauches 50 eindringt.

Auf die Außenseite ist ein Zusatzformteil 51 aus einem Elastomer oder einem Kunststoff aufgesetzt, das zur Erleichterung der Montage beispielsweise auch aus zwei Halbschalen gebildet sein kann, wobei eine solche Halbschalenbauweise insbesondere auch in der hier nicht ersichtlichen Form eine in die Profilierung des Wellschlauches 50 eingreifende Profilierung des Zusatzformteiles erlaubt, um so beim Verpressen das Wellenprofil des Schlauches zu stützen und höhere Preßkräfte anwenden zu können. Das Zusatzformteil 51 umfaßt einen radial nach außen gerichteten Bund 52 des Anschlußteiles 47 mit einer Innennut 53, wobei eine sichere Fixierung zwischen Anschlußteil 47 und Zusatzformteil 51 in Axialrichtung gegeben ist.

Auf dem Zusatzformteil 51 ist wieder eine Hülse 54 angeordnet, durch deren radiale Querschnittsverringerung Zusatzformteil 51, Ende des Wellschlauches 50 und Formteil 49 auf das Rohrstück 48 gepreßt und dabei zusammengedrückt sind. Ein den Wellschlauch 50 außen umgebender Geflechtsschlauch 55 ist zwischen Zusatzformteil 51 und Hülse 54 festgelegt.

Auch diese absolut dichte Verbindung zwischen Anschlußteil 47 und ringgeweltem Schlauch 50 koppelt diese beiden Teile galvanisch voneinander ab.

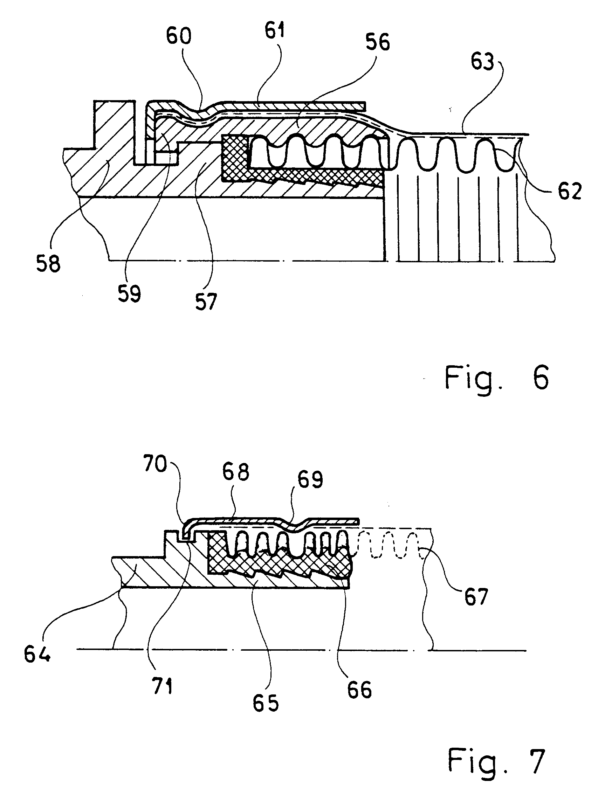

Figur 6 zeigt eine Variante zu dem anhand der Figur 5 geschilderten Gegenstand, auf deren Unterschiedlichkeit nur insoweit eingegangen werden soll daß das Zusatzformteil 56 aus Elastomer oder einem Kunststoff einen radialen Bund 57 des Anschlußteils 58 nur einseitig mit einer Nase 59 hintergreift, andererseits in besonderer Weise durch eine radiale Einprägung 60 der Hülse 61 gegen den Bund 57 gedrückt ist, wobei gleichzeitig eine besonders gute Festlegung des Endes eines den Wellschlauch 62 umgebenden Geflechtsschlauches 63 erzielt ist.

Figur 7 zeigt ein Anschlußteil 64 mit Rohrstück 65 und darauf über ein Formteil 66 festgelegten Ende eines ringförmig gewellten Metallschlauches 67, wobei die den Wellschlauch 67 und das Formteil 66 radial auf das Rohrstück 65 pressende Hülse 68 im Bereich des Wellschlauchendes eine radial nach innen gerichtete, gegebenenfalls umlaufende Einprägung 69 aufweist, die so angeordnet ist, daß sie in eines der Wellentäler des Schlauchendes 67 ragend die diesem Wellenteil benachbarten Schlauchteile ohne zusätzliche radiale Verformung beseite schiebt, so daß hier das Ende des Wellschlauches 67 zusätzlich eine besondere Halterung in Axialrichtung erfährt, die andererseits ihre Abstützung im Anschlußteil 64 über einen radial nach innen gerichteten Bund 70 der Hülse 68 erfährt, der in eine Umfangsnut 71 des Anschlußteiles 64 eingreift. Andererseits ist in der aus der Zeichnung ersichtlichen Weise das Ende des Wellschlauches 67 gestaucht, womit diesem eine erhöhte Radialdruckfestigkeit gegeben ist, so daß beim Aufpressen der Hülse 68 entsprechend höhere Kräfte angewendet werden können, die gleichermaßen die Dichtwirkung zwischen Wellschlauch 67 und Formteil 66 erhöhen.

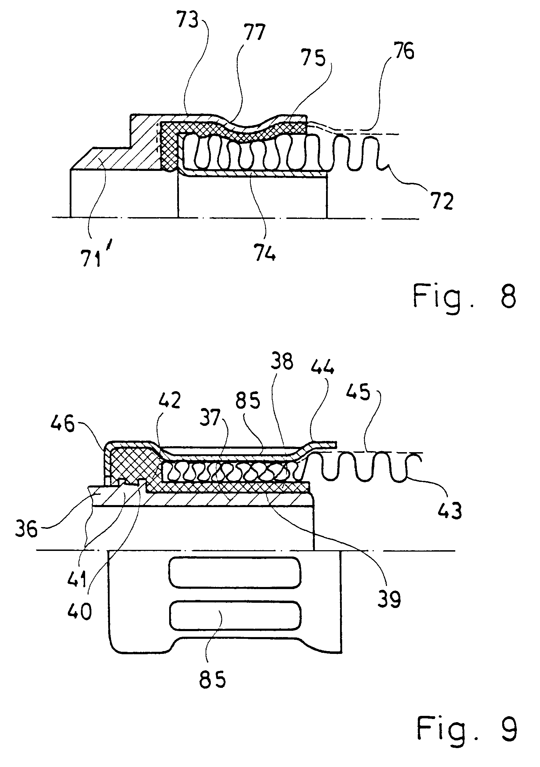

Figur 8 zeigt im wesentlichen der Vollständigkeit halber ein Anschlußteil 71 mit bezüglich dem Ende eines Wellschlauches 72 radial außen liegenden Rohrstück 73, gegen das das Wellschlauchende durch Aufweiten einer Hülse 74 unter Zwischenschaltung eines Formteils 75 gepreßt ist. Dabei ist zwischen Rohrstück 73 und Formteil 75 ein den Wellschlauch 72 umgebender Geflechtsmantel 76 mit eingepreßt. Außerdem ist dem Rohrstück 73 durch Einprägen eine Profilierung 77 gegeben.

Schließlich zeigt Figur 9 das Anschlußteil gemäß Figur 4, wobei jedoch die Hülse 44 mit achsparallelen Eindrückungen 85 versehen ist, die über die Umfangsrichtung verteilt angeordnet sind, um das Ende des Metallschlauches 43 radial zusammenzupressen und damit auf dem Formteil 38 festzulegen.

## Patentansprüche

1. Verbindung zwischen einer rohrförmigen Leitung (5, 19, 29, 43, 50, 62, 67, 72) und einem Anschlußteil (1, 17, 27, 36, 47, 58, 64, 71') durch Festlegen des Leitungsendes zwischen einem in dieses ragenden oder es umgebenden Rohrstück (3, 18, 28, 37, 48, 65, 73) des Anschlußteiles und einer Hülse (9, 23, 32, 44, 54, 61, 68, 74), die das Leitungsende endständig umgibt bzw. in dieses eingesetzt ist, wobei das Leitungsende durch radiale Querschnittsänderung des Rohrstückes oder der Hülse zwischen Hülse und Rohrstück eingepreßt ist und wobei zwischen Leitungsende und angrenzenden Teilen (3, 18, 28, 37, 48, 65, 73) ein elastisches Teil (6, 20, 30, 38, 49, 66, 75) angeordnet ist,
dadurch gekennzeichnet,
daß die Leitung ein Ringwellschlauch (5, 19, 29, 43, 50, 62, 67, 72) aus Metall oder ein Ringwellrohr aus Metall ist, und daß wenigstens zwischen Leitungsende und Rohrstück (3, 18, 28, 37, 48, 65, 73) ein hohlzylindrisches Formteil (6, 20, 30, 38, 49, 66, 75) aus einem Elastomer oder einem elastischen Kunststoff angeordnet und mit den angrenzenden Teilen verpreßt ist, dessen Länge im wesentlichen dem axialen Überdeckungsbereich von Leitungsende und Rohrstück entspricht.

2. Verbindung nach Anspruch 1,
dadurch gekennzeichnet,
daß das Rohrstück (3, 18, 28, 37, 48, 65) auf der dem Leitungsende zugewandten Seite mit einer umlaufenden Profilierung (4, 39) versehen ist.

3. Verbindung nach Anspruch 1,
dadurch gekennzeichnet,
daß die Wellung des Leitungsendes im Überdeckungsbereich mit dem Rohrstück (3, 18, 28, 37, 48,. 65, 73) eine flachgedrückte Wellung des Wellschlauches (5, 19, 29, 43, 50, 62, 67, 72) bzw. Wellrohres ist.

4. Verbindung nach Anspruch 1,
dadurch gekennzeichnet,
daß die Wellung des Leitungsendes im Überdeckungsbereich mit dem Rohrstück (65) eine axial gestauchte Wellung des Wellschlauches (67) bzw. des Wellrohres ist.

5. Verbindung nach einem der vorhergehenden Ansprüche,
dadurch gekennzeichnet,
daß zwischen Leitungsende und Hülse (23, 32, 54, 61) ein hohlzylindrisches Zusatzformteil (22, 31, 51, 56) aus einem Elastomer, einem Kunststoff oder dergleichen nichtmetallischem Werkstoff angeordnet und mit den angrenzenden Teilen verpreßt ist, dessen Länge im wesentlichen dem axialen Überdeckungsbereich von Leitungsende und Hülse entspricht.

6. Verbindung nach einem der vorhergehenden Ansprüche,
dadurch gekennzeichnet,
daß das Leitungsende stirnseits von einem radialen Bund (7, 21, 42) des Formteiles (4, 20, 38, 66) oder des Zusatzformteiles (22, 51) überdeckt ist.

7. Verbindung nach einem der Ansprüche 5 oder 6,
dadurch gekennzeichnet,
daß Formteil (30) und Zusatzformteil (22, 31) einstückig miteinander verbunden sind.

8. Verbindung nach einem der vorhergehenden Ansprüche,
dadurch gekennzeichnet,
daß Formteil und/oder Zusatzformteil vorgefertigt sind.

9. Verbindung nach einem der Ansprüche 1 bis 7,
dadurch gekennzeichnet,
daß Formteil (30, 38) und/oder Zusatzformteil (31) auf das Leitungsende und/oder das Rohrstück (37) bei ihrer Herstellung aufgeformt sind.

10. Verbindung nach Anspruch 9,
dadurch gekennzeichnet,
daß Formteil und/oder Zusatzformteil auf das Leitungsende bzw. Rohrstück aufgespritzt, aufvulkanisiert, aufgegossen oder dergleichen sind.

11. Verbindung nach einem der vorhergehenden Ansprüche,
dadurch gekennzeichnet,
daß das Formteil (4, 20, 30, 38, 49, 65) mit einer der Profilierung des Rohrstückes (3, 18, 28, 37, 48, 65) entsprechenden Gegenprofilierung versehen ist.

12. Verbindung nach einem der vorhergehenden Ansprüche,
dadurch gekennzeichnet,
daß Formteil und/oder Zusatzformteil auf ihrer dem Leitungsende zugewandten Seite mit einer diesem Leitungsende entsprechenden oder angepaßten Profilierung versehen sind.

13. Verbindung nach einem der vorhergehenden Ansprüche,
dadurch gekennzeichnet,
daß die Hülse (9, 23, 44, 68) im Überdeckungsbereich mit dem Leitungsende eine Profilierung (16, 24, 69, 85) aufweist.

14. Verbindung nach Anspruch 13,
dadurch gekennzeichnet,
daß die Profilierung (69) der Hülse (68) durch auf das Leitungsende zu gerichtete, gegebenenfalls zwischen Wellen des Leitungsendes eingreifende Einprägungen gebildet ist.

15. Verbindung nach Anspruch 13,
dadurch gekennzeichnet,
daß die Profilierung der Hülse (44) durch achsparallele, über den Umfang gleichmäßig verteilt angeordnete Eindrückungen (85) gegeben ist.

16. Verbindung nach Anspruch 13,
dadurch gekennzeichnet,
daß die Profilierung der Hülse (9, 23) durch Ringwellen (16, 24) gebildet ist.

17. Verbindung nach einem der vorhergehenden Ansprüche,
dadurch gekennzeichnet,
daß die Hülse (9, 54, 68) mit dem Anschlußteil (1, 47, 64) jenseits des Leitungsendes formschlüssig verbunden ist.

18. Verbindung nach Anspruch 17,
dadurch gekennzeichnet,
daß die Hülse (9, 54, 68) mit einem radial gerichteten Bund (10, 70) oder einer radial gerichteten Profilierung auf der dem Leitungsende abgewandten Seite eine entsprechende Kante (11, 52, 71) des Anschlußteiles (1, 47, 64) hintergreift.

19. Verbindung nach einem der vorhergehenden Ansprüche,
dadurch gekennzeichnet,
daß die Leitung (5, 19, 29, 43, 50, 62, 67, 72) einen Überzug aus einem Drahtgeflecht (12, 25, 33, 45, 55, 63, 76) aufweist, und daß dessen Enden zwischen Hülse oder Rohrstück und Leitungsende bzw. Zusatzformteil und/oder Anschlußteil festgelegt sind.

20. Verbindung nach einem der vorhergehenden Ansprüche,
dadurch gekennzeichnet,
daß das Anschlußteil (1) am Ansatz des Rohrstückes (3) eine radial gerichtete Anschlagfläche (8) für das Leitungsende und/oder Formteil bzw. Zusatzformteil aufweist.

## Claims

1. A connection between a pipe-shaped duct (5, 19, 29, 43, 50, 62, 67, 72) and a coupling part (1, 17, 27, 36, 47, 58, 64, 71') by fixing the duct end between a pipe piece (3, 18, 28, 37, 48, 65, 73) of the coupling part that projects into or surrounds the duct and a sleeve (9, 23, 32, 44, 54, 61, 68, 74), which surrounds the end of the duct with a closed end or is inserted into it, the duct end being pressed inward between the sleeve and the pipe piece through radial alteration of the cross-section of the pipe piece or of the sleeve and wherein a resilient part (6, 20, 30, 38, 49, 66, 75) is arranged between the duct end and adjacent parts (3, 18, 28, 37, 48, 65, 73),
characterised in that:
the duct is an annularly corrugated metallic hose (5, 19, 29, 43, 50, 62, 67, 72) or is an annularly corrugated metallic pipe, and that a hollow cylindrical moulded part (6, 20, 30, 38, 49, 66, 75) made of an elastomer or of a resilient plastics material is arranged at least between the end of the duct and pipe piece (3, 18, 28, 37, 48, 65, 73) and pressed together with the adjacent parts, the length of the moulded part essentially corresponding to the axial region of overlap between the duct end and the pipe piece.

2. Connection according to claim 1,
characterised in that:
the pipe piece (3, 18, 28, 37, 48, 65 ) is provided with peripheral profiling (4, 39) on the side facing the duct end.

3. A connection according to claim 1,
characterised in that:
the corrugation of the duct end in the overlap region with the pipe piece (3, 18, 28, 37, 48, 65, 73) is a flat-pressed corrugation of the corrugated hose (5, 19, 29, 43, 50, 62, 67, 72) or of the corrugated pipe, respectively.

4. Connection according to claim 1,
characterised in that:
the corrugation of the duct end in the overlap region with the pipe piece (65) is an axially upset corrugation of the corrugated hose (67) or of the corrugated pipe, respectively.

5. A connection according to any one of the preceding claims,
characterised in that:
a hollow cylindrical additional moulded part (22, 31, 51, 56) made from an elastomer, a plastics material or the like non-metallic working material is arranged between the duct end and the sleeve (23, 32, 54, 61) and is pressed together with the adjacent parts, the length of the additional moulded part corresponding essentially with the axial overlap region between the duct end and the sleeve.

6. A connection according to any one of the preceding claims,
characterised in that:
the face of the duct end is covered by a radial collar (7, 21, 42) of the moulded part (4, 20, 38, 66) or of the additional moulded part (22, 51).

7. A connection according to one of claims 5 or 6,
characterised in that:
the moulded part (30) and the additional moulded part (22, 31) are integrally connected together.

8. A connection according to any one of the preceding claims,
characterised in that:
the moulded part and/or the additional moulded part are prefabricated.

9. A connection according to one of claims 1 to 7,
characterised in that:
the moulded part (30, 38) and/or the additional moulded part (31) are moulded on the end of the duct and/or of the pipe piece (37) during their manufacture.

10. A connection according to claim 9,
characterised in that:
the moulded part and/or the additional moulded part are sprayed, vulcanised, cast or the like on the duct end and the pipe piece, respectively.

11. A connection according to any one of the preceding claims,
characterised in that:
the moulded part (4, 20, 30, 38, 49, 65) is provided with a counter-profiling corresponding to the profiling of the pipe piece (3, 18, 28, 37, 48, 65).

12. A connection according to any one of the preceding claims,
characterised in that:
on their side facing the duct end, the moulded pan and/or the additional moulded part are provided with profiling that corresponds or matches with that of the duct end.

13. A connection according to any one of the preceding claims,
characterised in that:
the sleeve (9, 23, 44, 68) has profiling (16, 24, 69, 85) in the region of overlap with the duct end.

14. A connection according to claim 13,
characterised in that:
the profiling (69) of the sleeve (68) is formed by means of notches directed towards the duct end, the notches being optionally engaged between the corrugations of the duct end.

15. A connection according to claim 13,
characterised in that:
the profiling of the sleeve (44) is provided by axially parallel, circumferentially uniformly distributed depressions (85).

16. A connection according to claim 13,
characterised in that:
the profiling of the sleeve (9, 23) is formed by annular corrugations (16, 24).

17. A connection according to any one of the preceding claims,
characterised in that:
the sleeve (9, 54, 68) is dovetailingly connected at the duct end with the coupling part (1, 47, 64).

18. A connection according to claim 17,
characterised in that:
the sleeve (9, 54, 68) engages in or behind a corresponding edge (11, 52, 71) of the coupling part (1, 47, 64) by way of a radially directed collar (10, 70) or a radially directed profiling on the side remote from the end of the duct.

19. A connection according to any one of the preceding claims,
characterised in that:
the duct (5, 19, 29, 43, 50, 62, 67, 72) has a covering made of a wire braid (12, 25, 33, 45, 55, 63, 76) and that the ends of the latter are fixed between the sleeve or the pipe piece and the duct end or the additional moulded part and/or the coupling part, respectively.

20. A connection according to any one of the preceding claims,
characterised in that:
the coupling part (1) at the extension of the pipe piece (3) has a radially directed abutment surface (8) for the end of the duct and/or the moulded part or the additional moulded part, respectively.

## Revendications

1. Système de raccordement entre une conduite tubulaire (5,19,29,43,50,62,67,72) et un élément de raccordement (1,17,27,36,47,58,64,71') par fixation de l'extrémité de la conduite entre un élément tubulaire (3,18,28,37,48,65,73), qui pénètre dans cette extrémité ou l'entoure, de l'élément de raccordement et une douille (9,23,32,44,54,61,68,74), qui entoure par son extrémité l'extrémité de la conduite ou est insérée dans cette extrémité, et dans lequel l'extrémité de la conduite est enfoncée sous l'effet d'une modification radiale de la section transversale de l'élément tubulaire ou de la douille entre la douille et l'élément tubulaire, et dans lequel une pièce élastique (6,20,30,38,49,66,75) est disposée entre l'extrémité de la conduite et des parties contiguës (3,18,28,37,48,65,73),
caractérisé en ce
que la conduite est un tuyau ondulé annulaire métallique (5,19, 29,43,50,62,67,72) ou un tube ondulé annulaire métallique et qu'au moins entre l'extrémité de la conduite et l'élément tubulaire (3,18,28,37,48,65,73) est disposée une pièce moulée cylindrique creuse (6,20,30,38,49,66,75) formée d'un élastomère ou d'une matière plastique élastique et qui est comprimée avec les éléments contigus, la longueur de cette pièce moulée correspondant sensiblement à la zone axiale de chevauchement entre l'extrémité de la conduite et l'élément tubulaire.

2. Système de raccordement selon la revendication 1, caractérisé en ce que l'élément tubulaire (3,18,28,37,48,65) comporte, sur son côté tourné vers l'extrémité de la conduite, un profil circonférentiel (4,39).

3. Système de raccordement selon la revendication 1, caractérisé en ce que l'ondulation de l'extrémité de la conduite dans la zone de chevauchement avec l'élément tubulaire (3,18,28,37,48,65,73) est une ondulation comprimée à plat du tuyau ondulé (5,19,29,43,50,62,67,72) ou du tube ondulé.

4. Système de raccordement selon la revendication 1, caractérisé en ce que l'ondulation de l'extrémité de conduite dans la zone de chevauchement avec l'élément tubulaire (65) est une ondulation refoulée axialement du tuyau ondulé (60) ou du tube ondulé.

5. Système de raccordement selon l'une des revendications précédentes, caractérisé en ce qu'entre l'extrémité de la conduite et la douille (23,32,54,61) est disposée une pièce moulée supplémentaire cylindrique creuse (22,31,51,56) formée d'un élastomère, d'une matière plastique ou d'un matériau non métallique ou analogue, et est comprimée avec les éléments contigus, dont la longueur correspond essentiellement à la zone de chevauchement axial entre l'extrémité de la conduite et la douille.

6. Système de liaison selon l'une des revendications précédentes, caractérisé en ce que l'extrémité de la conduite est recouverte frontalement par un collet radial (7,21,42) de la pièce moulée (4,20,38,66) ou de la pièce moulée supplémentaire (22,51).

7. Système de raccordement selon l'une des revendications 5 ou 6, caractérisé en ce que la pièce moulée (30) et la pièce moulée supplémentaire (22,31) sont réunies entre elles d'un seul tenant.

8. Système de raccordement selon l'une des revendications précédentes, caractérisé en ce que la pièce moulée et/ou la pièce moulée supplémentaire est/sont préfabriquées.

9. Système de raccordement selon l'une des revendications 1 à 7, caractérisé en ce que la pièce moulée (30,38) et/ou la pièce moulée supplémentaire (31) est/sont formées sur l'extrémité de la conduite et/ou l'élément tubulaire (37), lors de leur fabrication.

10. Système de raccordement selon la revendication 9, caractérisé en ce que la pièce moulée et/ou la pièce moulée supplémentaire est moulée par projection, appliquée par vulcanisation, coulée ou analogue sur l'extrémité de la conduite ou sur l'élément tubulaire.

11. Système de raccordement selon l'une des revendications précédentes, caractérisé en ce que la pièce moulée (4,20,30,38,49,65) est équipée d'un profil antagoniste qui correspond au profil de l'élément tubulaire (3,18,28,37,48,65).

12. Système de raccordement selon l'une des revendications précédentes, caractérisé en ce que la pièce moulée et/ou la pièce moulée supplémentaire comportent, sur leur côté tourné vers l'extrémité de la conduite, un profil correspondant ou adapté à cette extrémité de la conduite.

13. Système de raccordement selon l'une des revendications précédentes, caractérisé en ce que la douille (9,23,44,68) possède, dans la zone de chevauchement avec l'extrémité de la conduite, un profil (16,24,69,85).

14. Système de raccordement selon la revendication 13, caractérisé en ce que le profil (69) de la douille (68) est formé par des parties matricées en creux qui sont dirigées vers l'extrémité de la conduite et s'engagent éventuellement entre des ondulations de l'extrémité de la conduite.

15. Système de raccordement selon la revendication 13, caractérisé en ce que le profil de la douille (44) est formé par des empreintes en creux (85) qui sont parallèles à l'axe et sont réparties uniformément sur la périphérie.

16. Système de raccordement selon la revendication 13, caractérisé en ce que le profil de la douille (9,23) est formé par des ondulations annulaires (16,24).

17. Système de raccordement selon l'une des revendications précédentes, caractérisé en ce que la douille (9,54,68) est raccordée selon une liaison par formes complémentaires à l'élément de raccordement (1,47,64) au-delà de l'extrémité de la conduite.

18. Système de raccordement selon la revendication 17, caractérisé en ce que la douille (9,54,68) s'engage, par un collet radial (10,70) ou par un profil radial situé sur le côté tourné à l'opposé de l'extrémité de la conduite, derrière un bord correspondant (11,52,71) de l'élément de raccordement (1,47,64).

19. Système de raccordement selon l'une des revendications précédentes, caractérisé en ce que la conduite (5,19,29,43,50,62,67,72) possède un revêtement formé d'un treillis de fil (12,25,33,45,55,63,76), et que les extrémités de ce treillis sont fixées entre la douille ou l'élément tubulaire et l'extrémité de la conduite ou la pièce moulée supplémentaire et/ou l'élément de raccordement.

20. Système de raccordement selon l'une des revendications précédentes, caractérisé en ce que l'élément de raccordement (1) situé sur l'embout de l'élément tubulaire (3) possède une surface radiale de butée (8) pour l'extrémité de la conduite et/ou la pièce moulée ou la pièce moulée supplémentaire.
